# EUROPÄISCHE PATENTSCHRIFT

(11) **EP 1 252 037 B1**
(45) Veröffentlichungstag und Bekanntmachung des Hinweises auf die Patenterteilung: **08.10.2003**
(21) Anmeldenummer: 01990524.9
(22) Anmeldetag: 07.12.2001
(51) Int. Cl.: B60N 2/015

(54) **VERANKERUNGSEINRICHTUNG FÜR EINEN WERKZEUGLOS EIN- UND AUSBAUBAREN FAHRZEUGSITZ**
ANCHORING DEVICE FOR A VEHICLE SEAT THAT CAN BE INSTALLED AND REMOVED WITHOUT THE USE OF TOOLS
DISPOSITIF D'ANCRAGE POUR SIEGE DE VEHICULE POUVANT ETRE MONTE ET DEMONTE SANS OUTIL

(30) Priorität: 07.12.2000 DE 20020753 U
(43) Veröffentlichungstag der Anmeldung: 30.10.2002
(73) Patentinhaber: Johnson Controls GmbH, 51399 Burscheid (DE)
(72) Erfinder: OTTO, Jürgen, 51399 Burscheid (DE)
(74) Vertreter: Kutzenberger, Helga, Dr.
(86) Internationale Anmeldenummer: EP0114362
(87) Internationale Veröffentlichungsnummer: WO02045994

(56) Entgegenhaltungen:
- DE-A- 3 831 101
- DE-A- 19 628 382
- DE-A- 19 950 334

## Beschreibung

Die vorliegende Erfindung betrifft eine Verankerungseinrichtung für einen innerhalb eines Fahrzeuges werkzeuglos ein- und ausbaubaren Sitz, mit mindestens einer Verriegelungseinheit mit einem dem Fahrzeug insbesondere ortsfest zugeordneten ersten Funktionsteil und einem dem Sitz zugeordneten zweiten Funktionsteil, wobei die Funktionsteile einerseits durch ein hinterschnittenes, insbesondere als Kopfbolzen ausgebildetes Ansatzelement und andererseits durch ein Aufnahmeteil mit einer Verriegelungsaufnahme insbesondere in Form einer Riegelöffnung derart gebildet sind, dass der Sitz zur Montage in einer zu einer Sitzbasisebene etwa senkrechten Richtung einsetzbar und nachfolgend parallel zur Sitzbasisebene in eine Riegelstellung verschiebbar ist, wobei in der Riegelstellung das Ansatzelement gegen senkrechte Relativbewegungen gesichert (formschlüssig hintergriffen) in der Verriegelungsaufnahme sitzt, und wobei dem Aufnahmeteil zum lösbaren Arretieren des Ansatzelementes in der Riegelstellung ein hebelartiges Sperrelement zugeordnet ist, das um eine zur Sitzbasisebene insbesondere senkrechte Achse schwenkbar ist und einen hakenartigen Arretierabschnitt aufweist, mit dem es in einer Arretierstellung den Kopfbolzen umgreift und gegen eine Rückverschiebung aus der Riegelstellung arretiert.

Die DE 196 28 382 A1 beschreibt eine solche Schnellmontagevorrichtung für Kfz-Sitze, wobei an der Sitzstruktur hinterschnittene Kopfbolzen angeordnet sind, die in chassisfeste Schlüssellochöffnungen einsetzbar und dann in einer gegenüber der Einsetzposition verschobenen Fixierstellung verriegelbar sind. Diese Verriegelung erfolgt über jeweils eine Verriegelungsklinke, die über eine Feder vorgespannt ist und an einem chassisfesten Lagerelement schwenkbar um eine senkrechte Achse gelagert ist. Die Verriegelungsklinke ist über eine Steuerfläche zum seitlichen Verschwenken durch den anliegenden Kopfbolzen beim Einschieben in die Fixierstellung und zum Hintergreifen des Kopfbolzens durch einen hakenförmigen Abschnitt in Fixierstellung ausgebildet.

Dies bedeutet, dass der gesamte Sitz mit dem oder den Kopfbolzen bis in die Fixierstellung verschoben werden muß, also bis die jeweilige Verriegelungsklinke den zugehörigen Kopfbolzen hinterrastet. Dieses Verschieben des gesamten Sitzes ist vor allem bei Mehrfachsitzen, wie Zweier- oder Dreiersitzbänke, sehr schwierig und umständlich. So kommt es dabei häufig zu einem Verkanten durch ungleichmäßiges Verschieben auf den beiden Seiten des Sitzes. Für einen Ausbau des Sitzes ist die bzw. jede Verriegelungsklinke mit einer Betätigungsstange verbunden, über die sie gegen ihre Federkraft in eine Freigabestellung bewegt werden kann, um dann den Sitz zurück in die Einsetz- bzw. Entnahmeposition verschieben zu können.

Die DE 38 31 101 C2 beschreibt eine ähnliche Sitz- Befestigungsvorrichtung, wobei pilzartige Kopfbolzen als bodenfeste Bestandteile vorgesehen sind. Der Sitz weist für jeden Bolzen eine in einer Platte gebildete Riegelöffnung auf. Zur Arretierung der Montageposition ist hier jeweils ein senkrecht verschiebbar geführter, riegel- oder bolzenartiger Schieber vorgesehen, der durch Federkraft einrastet. Auch hier muß somit der Sitz ganz bis in die verriegelte Position verschoben werden.

Der vorliegenden Erfindung liegt die Aufgabe zugrunde, eine Verankerungseinrichtung der beschriebenen, gattungsgemäßen Art dahingehend zu verbessern, dass sie einen erhöhten Anwendungskomfort insbesondere beim Sitzeinbau (Montage) gewährleistet.

Erfindungsgemäß wird dies dadurch erreicht, dass das Sperrelement derart mit einer Betätigungseinrichtung verbunden und im Bereich des Arretierabschnittes derart ausgebildet ist, dass der Sitz nach dem senkrechten Einsetzen aus einer Zwischenposition zwangsweise mittels der Betätigungseinrichtung in die Riegelstellung verschiebbar ist, indem das Sperrelement das Ansatzelement erfasst und beim Verschwenken die Funktionsteile in die Riegelstellung zusammenzieht. Dazu sei bemerkt, dass es sich bei der beschriebenen Bewegung um eine Relativbewegung handelt, wobei entweder das Ansatzelement oder das Aufnahmeteil ortsfest angeordnet sein kann.

Durch die erfindungsgemäße Ausgestaltung braucht vorteilhafterweise nicht mehr der ganze Sitz unmittelbar manuell verschoben zu werden, sondern das Verschieben erfolgt mittels der erfindungsgemäßen Betätigungseinrichtung. Bei dieser kann es sich mit Vorteil um eine kostengünstige und manuell betätigbare Hebelanordnung handeln. Hierbei ist es besonders vorteilhaft, wenn mindestens zwei im Wesentlichen gleichartige Verriegelungseinheiten symmetrisch beidseitig einer Verschiebemittelachse des Sitzes angeordnet und derart mit der gleichen Betätigungseinrichtung verbunden sind, dass sie auf beiden Sitzseiten eine gleichmäßige Verschiebebewegung bewirken. Dadurch werden jegliche Verkantungen des Sitzes wirksam vermieden. Durch bestimmte Hebelverhältnisse innerhalb der Hebelanordnung kann vorteilhafterweise eine Kraftübersetzung erreicht werden, wodurch das Verschieben des Sitzes bis in die Riegelstellung auch von schwächeren und ungeübteren Personen problemlos möglich ist.

Insgesamt führt somit die Erfindung zu einem verbesserten Komfort beim Einbau des Sitzes.

Weitere vorteilhafte Ausgestaltungsmerkmale sind in den Unteransprüchen sowie der folgenden Beschreibung enthalten.

Anhand eines in der Zeichnung veranschaulichten, bevorzugten Ausführungsbeispiels soll die Erfindung genauer erläutert werden. Dabei zeigen:
- Fig. 1: eine Perspektivansicht der wesentlichen Bestandteile einer erfindungsgemäßen Verankerungseinrichtung für einen - selbst nicht dargestellten - Sitz,
- Fig. 2: eine Draufsicht in Pfeilrichtung II gemäß Fig. 1 unter Weglassung von Aufnahmeteilen,
- Fig. 3: einen vergrößerten Querschnitt in der Ebene III - III gemäß Fig. 1 (vergleiche auch die Ebene III - III in Fig. 2),
- Fig. 4: einen Schnitt in der Ebene IV - IV gemäß Fig. 1 (vergleiche auch Fig. 2),
- Fig. 5: einen Schnitt in der Ebene V - V gemäß Fig. 1 (vergleiche Fig. 2),
- Fig. 6: einen Schnitt in der Ebene VI - VI gemäß Fig. 5.

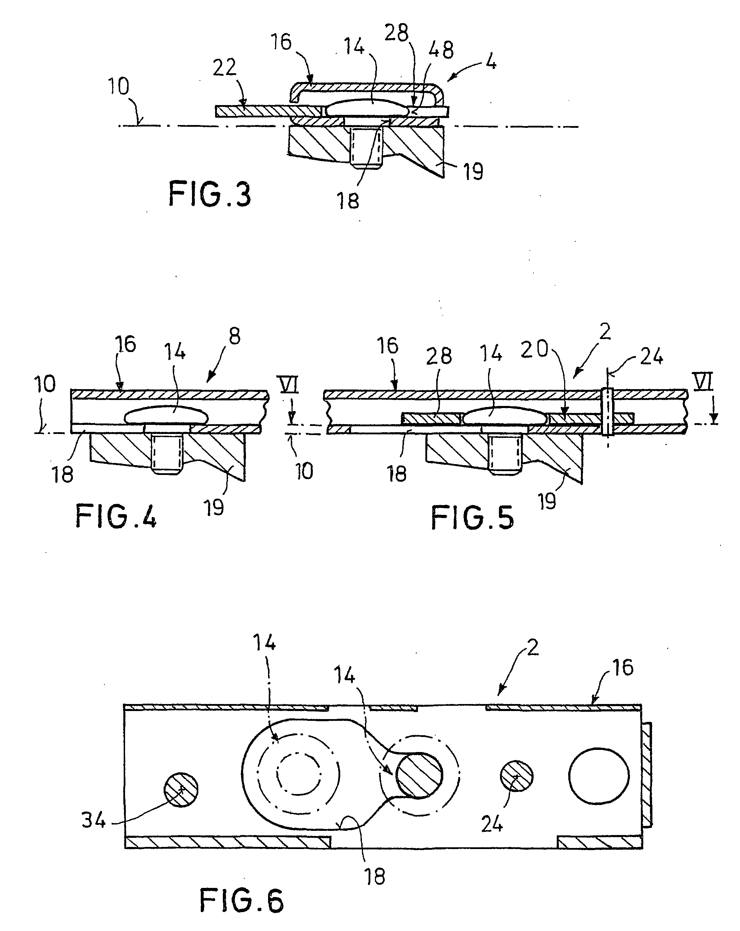

In der dargestellten, bevorzugten Ausführungsform besteht eine erfindungsgemäße Verankerungseinrichtung aus zwei Verriegelungseinheiten 2, 4 und zwei zusätzlichen Verankerungen 6, 8. Der - selbst nicht dargestellte - Sitz ist zur Montage zunächst senkrecht (vertikal) zu einer (horizontalen) Sitzbasisebene 10 (vergleiche Fig. 3 bis 5) einsetzbar und anschließend in der Sitzbasisebene 10 in Richtung einer Verschiebemittelachse 12 bis in eine Riegelstellung verschiebbar. Eine Demontage erfolgt nach einem Entriegeln durch eine umgekehrte Bewegungsabfolge. Die Verriegelungseinheiten 2, 4 einerseits und die Verankerungen 6, 8 andererseits liegen jeweils etwa parallel und vorzugsweise symmetrisch zueinander beidseitig der Verschiebemittelachse 12.

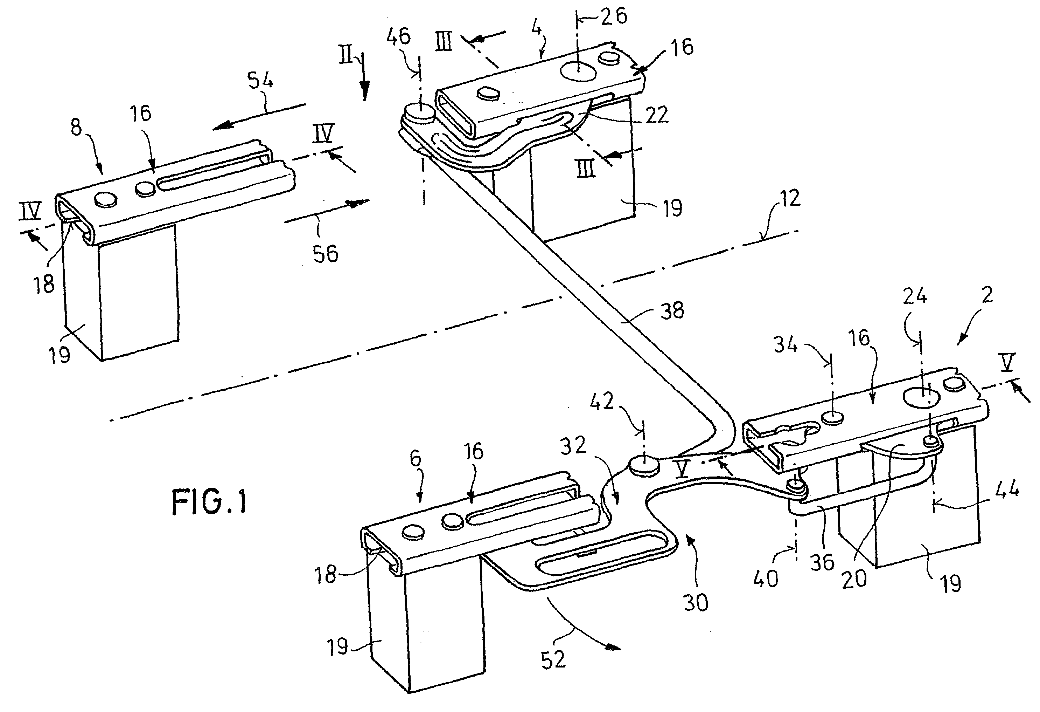

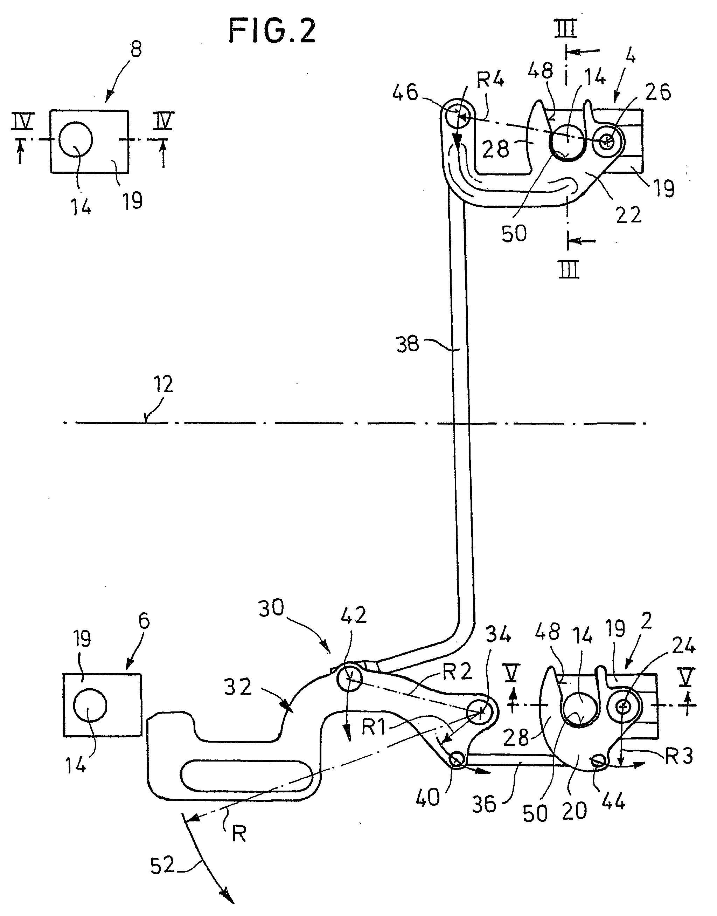

Jede Verriegelungseinheit 2, 4 und jede Verankerung 6, 8 besteht aus einem dem Fahrzeug insbesondere ortsfest zugeordneten ersten Funktionsteil und einem dem Sitz zugeordneten zweiten Funktionsteil. In der bevorzugten Ausführung wird jedes fahrzeug- bzw. bodenseitige Funktionsteil - von einem Ansatzelement in Form eines pilzartig hinterschnittenen Kopfbolzens 14 gebildet, und der Sitz weist jeweils ein zugehöriges Aufnahmeteil 16 mit einer Verriegelungsaufnahme (Riegelöffnung 18) auf. Die Aufnahmeteile 16 sind in Fig. 2 nicht dargestellt. Die Kopfbolzen 14 können direkt auf einem Fahrzeugboden oder - wie dargestellt - auf z.B. quaderförmigen Auflageteilen19 angeordnet sein. Die Aufnahmeteile 16 sind jeweils als hohles, längliches Profilelement (Halteprofil), z.B. als Blechbiegeteil, ausgebildet. Die Riegelöffnungen 18 können schlüssellochartig (insbesondere bei den Aufnahmeteilen 18 der ersten und zweiten Verriegelungseinheit 2, 4; siehe Fig. 5 und 6) oder schlitzartig randoffen (vorzugsweise bei den Aufnahmeteilen 18 der ersten und zweiten Verankerung 6, 8; siehe Fig. 1 und 4) ausgebildet sein und weisen jeweils einen erweiterten Einführbereich für den Kopfbolzen 14 und einen verengten Riegelbereich auf, in dem der jeweilige Kopfbolzen 14 in einer Riegelstellung (vergleiche Fig. 3, 4 und 5) gegen senkrechte Bewegungen gesichert, formschlüssig hintergriffen sitzt.

Bei jeder Verriegelungseinheit 2, 4 ist dem Aufnahmeteil 16 zum lösbaren Arretieren des Kopfbolzens 14 in der Riegelstellung ein hebelartiges Sperrelement 20 bzw. 22 zugeordnet. Jedes Sperrelement 20, 22 ist um eine zur Sitzbasisebene 10 senkrechte Achse 24 bzw. 26 schwenkbar und weist einen hakenartigen Arretierabschnitt 28 auf, mit dem es in einer Arretierstellung den zugehörigen Kopfbolzen 14 umgreift und so gegen eine Rückverschiebung aus der Riegelstellung arretiert.

Die Verankerungen 6, 8 können ohne eine solche Verschiebe- Verriegelung ausgebildet sein.

Erfindungsgemäß ist nun das Sperrelement 20, 22 mit einer Betätigungseinrichtung 30 derart verbunden sowie im Bereich seines Arretierabschnittes 28 derart ausgebildet, dass der Sitz nach dem senkrechten Einsetzen zwangsweise mittels der Betätigungseinrichtung 30 in die Riegelstellung verschiebbar ist, indem das Sperrelement 20, 22 den zugehörigen Kopfbolzen 14 erfasst und beim Verschwenken in die Riegelstellung zieht.

Gemäß Fig. 1 und 2 ist die Betätigungseinrichtung 30 als Hebelanordnung mit einem manuell betätigbaren Handhebel 32 ausgebildet. Dieser Handhebel 32 ist um eine zu der Sitzbasisebene 10 senkrechte Schwenkachse 34 verschwenkbar insbesondere mit dem Aufnahmeteil 16 der ersten Verriegelungseinheit 2 verbunden (siehe Fig. 1). Dabei ist der Handhebel 32 einerseits über ein erstes Verbindungselement 36 gelenkig mit dem ersten Sperrelement 20 der ersten Verriegelungseinheit 2 sowie andererseits über ein zweites Verbindungselement 38 gelenkig mit dem zweiten Sperrelement 22 der zweiten Verriegelungseinheit 4 verbunden. Die Verbindungselemente 36, 38 sind von jeweils einer Stange oder dergleichen gebildet, um Zug- und Druckkräfte übertragen zu können, wobei die Stangen Krümmungen oder Abwinkelungen aufweisen können (z. B. 38), um sie kollisionsfrei am Sitz unterbringen und führen zu können. Der Handhebel 32 ist mit dem ersten Verbindungselement 36 über eine erste Schwenkachse 40 und mit dem zweiten Verbindungselement 38 über eine zweite Schwenkachse 42 verbunden. Das erste Verbindungselement 36 ist auf seiner anderen Seite mit dem ersten Sperrelement 20 über eine dritte Schwenkachse 44 verbunden und das zweite Verbindungselement 38 mit dem zweiten Sperrelement 22 über eine vierte Schwenkachse 46. Dabei liegen - jeweils bezogen auf die Schwenkachse 34 des Handhebels 32 - die erste Schwenkachse 40 auf einem ersten Schwenkradius R1 und die zweite Schwenkachse 42 auf einem zweiten Schwenkradius R2. Ferner liegen - bezogen auf die Schwenkachse 24 bzw. 26 des jeweiligen Sperrelementes 20 bzw. 22 - die dritte Schwenkachse 44 auf einem dritten Schwenkradius R3 und die vierte Schwenkachse 46 auf einem vierten Schwenkradius R4. Hierbei ist grundsätzlich vorgesehen, dass das Größenverhältnis des ersten Schwenkradius R1 zu dem zweiten Schwenkradius R2 gleich dem Verhältnis des dritten Schwenkradius R3 zu dem vierten Schwenkradius R4 ist; es gilt folglich R1:R2= R3:R4. Hierdurch wird vorteilhafterweise erreicht, dass die Verschiebebewegungen auf beiden Seiten jeweils gleich sind. Dies gilt vorteilhafterweise auch dann, wenn der erste Schwenkradius R1 ungleich dem zweiten Schwenkradius R2 ist. Dies ist zur Unterbringung der Bestandteile im Bereich des Sitz-Chassis von Vorteil. Der Handhebel 32 ist vorteilhafterweise bezüglich seiner gesamten Hebellänge und des daraus resultierenden Hebelradius R größer als die beiden Schwenkradien R1 und R2 der ersten und zweiten Schwenkachsen 40, 42 ausgebildet. Hierdurch wird eine Kraft-Übersetzung erreicht, die eine leichtgängige Betätigung zum Verschieben des Sitzes ermöglicht. Um ausgehend von einer senkrecht eingesetzten Zwischenposition des Sitzes mit den Sperrelementen 20, 22 die Kopfbolzen 14 erfassen zu können, weist jedes Sperrelement 20, 22 ausgehend von seinem hakenartigen Arretierabschnitt 28 eine derart schräg verlaufende Fangkante 48 auf, dass der jeweilige Kopfbolzen 14 beim Verschwenken des Sperrelementes 20, 22 über die Fangkante 48 gleitend in die Riegelstellung gezogen wird. Es sei bemerkt, dass hierbei jedes Sperrelement 20, 22 mit dem vergrößerten Kopf des Kopfbolzens 14 zusammenwirkt (vergleiche dazu Fig. 3 und 5).

Gemäß Fig. 2 weist jedes Sperrelement 20, 22 eine etwa U-förmige, an den Kopf des Kopfbolzens 14 derart angepasste Aufnahmeöffnung 50 auf, dass der Kopfbolzen 14 in der Riegelstellung zumindest annähernd spielfrei im Zusammenwirken mit der Riegelöffnung 18 gehalten wird.

Anhand der Fig. 1 soll nun die Funktion der erfindungsgemäßen Verankerungseinrichtung erläutert werden. Zur Montage des Sitzes wird dieser mit den Aufnahmeteilen 16 in senkrechter Richtung auf die Kopfbolzen 14 aufgesetzt (entsprechend der Pfeilrichtung II), wobei die Kopfbolzen 14 in die erweiterten Bereiche der Riegelöffnungen 18 eingreifen. Dabei befindet sich die Betätigungseinrichtung 30 in einer Freigabestellung, in der der Handhebel 32 in Pfeilrichtung 52 nach außen verschwenkt ist. Aus dieser Freigabestellung erfolgt nach dem Aufsetzen des Sitzes eine Bewegung des Handhebels 32 entgegen der Pfeilrichtung 52 nach innen, wodurch der Sitz in Pfeilrichtung 54 in die Riegelstellung verschoben wird, in der die Kopfbolzen 14 in senkrechter Richtung formschlüssig in den verengten Bereichen der Riegelöffnungen 18 sitzen. In dieser Stellung bewirken die Sperrelemente 20, 22 auch die Arretierung gegen Rückverschieben. Diese Rückverschiebung in Pfeilrichtung 56 zur Demontage des Sitzes ist erst nach Verschwenken des Handhebels 32 in Pfeilrichtung 52 nach außen möglich, indem die Sperrelemente 20, 22 die Kopfbolzen 14 freigeben. Abschließend kann der Sitz wieder senkrecht nach oben entnommen werden.

In einer weiteren bevorzugten Ausgestaltung der Erfindung ist vorgesehen, dass der Handhebel 32 im Seitenbereich des Sitzes gut und ergonomisch ergreifbar ist und insbesondere zwischen dem Sitz und einer angrenzenden Fahrzeugtür derart angeordnet ist, dass ein Verschwenken in seine Entriegelposition in Pfeilrichtung 52 zwecks Ausbau des Sitzes nur bei geöffneter Fahrzeugtür möglich ist. Diese Maßnahme stellt einen wichtigen Sicherheitsaspekt dar, weil ein Entriegeln des Sitzes während der Fahrt, d. h. bei geschlossener Fahrzeugtür, ausgeschlossen ist.

Die die Betätigungseinrichtung 30 bildende Hebelanordnung ist so ausgelegt, dass nur geringe Betätigungskräfte erforderlich sind, um die Reibung beim Verschieben des - Sitzes zu überwinden. Die Verankerungseinrichtung ist vorteilhafterweise sehr flach aufgebaut und kann deshalb als separates Modul aufgebaut sein, welches bei Bedarf auch bei beengten Platzverhältnissen eingesetzt werden kann. Die Positionen der Befestigungspunkte (Kopfbolzen) können im Fahrzeug so abgestimmt werden, dass der Sitz wahlweise ohne oder mit dem Modul eingebaut werden kann.

## Patentansprüche

1. Verankerungseinrichtung für einen innerhalb eines Fahrzeuges werkzeuglos ein- und ausbaubaren Sitz, mit mindestens einer Verriegelungseinheit (2,4) mit einem dem Fahrzeug insbesondere ortsfest zugeordneten ersten Funktionsteil und einem dem Sitz zugeordneten zweiten Funktionsteil, wobei die Funktionsteile einerseits durch ein hinterschnittenes Ansatzelement (14) und andererseits durch ein Aufnahmeteil (16) mit einer Verriegelungsaufnahme (18) derart gebildet sind, dass der Sitz zur Montage in einer zu einer Sitzbasisebene (10) etwa senkrechten Richtung einsetzbar und nachfolgend parallel zur Sitzbasisebene (10) in eine Riegelstellung verschiebbar ist, wobei in der Riegelstellung das Ansatzelement (14) gegen senkrechte Relativbewegungen gesichert in der Verriegelungsaufnahme (18) sitzt, und wobei dem Aufnahmeteil (16) zum lösbaren Arretieren der Funktionsteile in der Riegelstellung ein Sperrelement (20, 22) zugeordnet ist, das um eine insbesondere zur Sitzbasisebene (10) senkrechte Achse (24, 26) schwenkbar ist und einen Arretierabschnitt (28) aufweist, mit dem es in einer Arretierstellung das Ansatzelement (14) umgreift und gegen eine Rückverschiebung aus der Riegelstellung arretiert,
**dadurch gekennzeichnet, dass** das Sperrelement (20, 22) derart mit einer Betätigungseinrichtung (30) verbunden und im Bereich des Arretierabschnittes (28) derart ausgebildet ist, dass der Sitz nach dem senkrechten Einsetzen zwangsweise mittels der Betätigungseinrichtung (30) in die Riegelstellung verschiebbar ist, indem das Sperrelement (20, 22) das Ansatzelement (14) erfasst und beim Verschwenken die Funktionsteile in die Riegelstellung zieht.

2. Verankerungseinrichtung nach Anspruch 1,
**dadurch gekennzeichnet, dass** zwei im Wesentlichen gleichartige Verriegelungseinheiten (2, 4) beidseitig einer Verschiebemittelachse (12) des Sitzes angeordnet und derart mit der gleichen Betätigungseinrichtung (30) verbunden sind, dass sie auf beiden Sitzseiten eine gleichmäßige Verschiebebewegung bewirken.

3. Verankerungseinrichtung nach Anspruch 2,
**dadurch gekennzeichnet, dass** die Betätigungseinrichtung (30) als Hebelanordnung mit einem um eine insbesondere zur Basisebene (10) senkrechte Schwenkachse (34) schwenkbaren Handhebel (32) ausgebildet ist, wobei der Handhebel (32) einerseits über ein erstes Verbindungselement (36) gelenkig mit dem ersten Sperrelement (20) der ersten Verriegelungseinheit (2) und andererseits über ein zweites Verbindungselement (38) gelenkig mit dem zweiten Sperrelement (22) der zweiten Verriegelungseinheit (4) verbunden ist.

4. Verankerungseinrichtung nach Anspruch 3,
**dadurch gekennzeichnet, dass** der Handhebel (32) mit dem ersten Verbindungselement (36) über eine erste Schwenkachse (40) und mit dem zweiten Verbindungselement (38) über eine zweite Schwenkachse (42) verbunden ist, wobei - jeweils bezogen auf die Schwenkachse (34) des Handhebels (32) - die erste Schwenkachse (40) auf einem ersten Schwenkradius (R1) und die zweite Schwenkachse (42) auf einem zweiten Schwenkradius (R2) liegen.

5. Verankerungseinrichtung nach Anspruch 3 oder 4,
**dadurch gekennzeichnet, dass** das erste Verbindungselement (36) mit dem ersten Sperrelement (20) über eine dritte Schwenkachse (44) und das zweite Verbindungselement (38) mit dem zweiten Sperrelement (22) über eine vierte Schwenkachse (46) verbunden sind, wobei - bezogen auf die Schwenkachse (24, 26) des jeweiligen Sperrelementes (20, 22) - die dritte Schwenkachse (44) auf einem dritten Schwenkradius (R3) und die vierte Schwenkachse (46) auf einem vierten Schwenkradius (R4) liegen.

6. Verankerungseinrichtung nach Anspruch 4 und 5,
**dadurch gekennzeichnet, dass** das Größenverhältnis des ersten zum zweiten Schwenkradius (R1:R2) gleich dem Verhältnis des dritten zum vierten Schwenkradius (R3:R4) ist.

7. Verankerungseinrichtung nach einem der Ansprüche 4 bis 6,
**dadurch gekennzeichnet, dass** der Handhebel (32) bezüglich seiner gesamten Hebellänge und des daraus resultierenden Hebelradius (R) größer als die beiden Schwenkradien (R1, R2) der ersten und zweiten Schwenkachsen (40, 42) ausgebildet ist.

8. Verankerungseinrichtung nach einem der Ansprüche 1 bis 7,
**dadurch gekennzeichnet, dass** das/jedes Sperrelement (20, 22) ausgehend von seinem Arretierabschnitt (28) eine derart schräg verlaufende Fangkante (48) aufweist, dass das Ansatzelement (14) beim Verschwenken des Sperrelementes (20, 22) über die Fangkante (48) gleitend in die Riegelstellung gezogen wird.

9. Verankerungseinrichtung nach einem der Ansprüche 1 bis 8,
**dadurch gekennzeichnet, dass** das/jedes Sperrelement (20, 22) eine etwa U-förmige, an das Ansatzelement (14) derart angepasste Aufnahmeöffnung (50) aufweist, dass das Ansatzelement (14) in der Riegelstellung zumindest annähernd spielfrei in der Verriegelungsaufnahme (18) sitzt.

10. Verankerungseinrichtung nach einem der Ansprüche 1 bis 9,
**gekennzeichnet durch** zwei zusätzliche Verankerungen (6, 8), die relativ zu den Verriegelungseinheiten (2, 4) in Verschieberichtung vor-oder zurückversetzt und beidseitig der Verschiebemittelachse (12) angeordnet sind, wobei diese Verankerungen (6, 8) jeweils aus einem Ansatzelement (14) und einem Aufnahmeteil (16) im Sinne der Verriegelungseinheit (2/4) - wahlweise mit oder ohne Sperrelement - bestehen.

11. Verankerungseinrichtung nach einem der Ansprüche 1 bis 10,
**dadurch gekennzeichnet, dass** die Ansatzelemente (14) die dem Fahrzeug zugeordneten Funktionsteile und die Aufnahmeteile (16) mit den Verriegelungsaufnahmen (18) und gegebenenfalls den Sperrelementen (20, 22) und der Betätigungseinrichtung (30) die dem Sitz zugeordneten Funktionsteile bilden.

12. Verankerungseinrichtung nach einem der Ansprüche 3 bis 11,
**dadurch gekennzeichnet, dass** der Handhebel (32) im Seitenbereich des Sitzes zwischen diesem und einer Fahrzeugtür derart angeordnet ist, dass ein Verschwenken in seine Entriegelungsposition zwecks Ausbau des Sitzes nur mit geöffneter Fahrzeugtür möglich ist.

## Claims

1. Anchoring device for a seat which can be installed and removed within a vehicle without the use of tools, having at least one locking unit (2, 4) with a first functional part assigned, in particular in a positionally fixed manner, to the vehicle and a second functional part assigned to the seat, the functional parts being formed, firstly, by an undercut attachment element (14) and, secondly, by a receiving part (16) having a locking socket (18), in such a manner that the seat can be inserted, for installation purposes, in a direction approximately perpendicular with respect to a seat-base plane (10) and can subsequently be displaced parallel to the seat-based plane (10) into a latching position, the attachment element (14) being seated in the latching position in the locking socket (18) in a manner secured against vertical relative movements, and, for the releasable retention of the functional parts in the latching position, the receiving part (16) being assigned a blocking element (20, 22) which can be pivoted about an axis (24, 26), which is perpendicular in particular with respect to the seat-based plane (10), and has a retaining section (28) with which is engages around the attachment element (14) in a retaining position and retains it against being displaced back out of the latching position, **characterized in that** the blocking element (20, 22) is connected to an actuating device (30) in such a manner and is designed in the region of the retaining section (28) in such a manner that the seat, after being inserted vertically, can be forcibly displaced by means of the actuating device (30) into the latching position by the blocking element (20, 22) grasping the attachment element (14) and, as it pivots, pulling the functional parts into the latching position.

2. Anchoring device according to Claim 1, **characterized in that** two essentially identical locking units (2, 4) are arranged on both sides of a central displacement axis (12) of the seat and are connected to the same actuating device (30) in such a manner that they bring about a uniform displacement movement on both sides of the seat.

3. Anchoring device according to Claim 2, **characterized in that** the actuating device (30) is designed as a lever arrangement having a hand lever (32) which can be pivoted about a pivot axis (34) which is perpendicular in particular with respect to the base plane (10), the hand lever (32) being connected on one side via a first connecting element (36) in an articulated manner to the first blocking element (20) of the first locking unit (2) and being connected on the other side via a second connecting element (38) in an articulated manner to the second blocking element (22) of the second locking unit (4).

4. Anchoring device according to Claim 3, **characterized in that** the hand lever (32) is connected to the first connecting element (36) via a first pivot axis (40) and to the second connecting element (38) via a second pivot axis (42), the first pivot axis (40) lying on a first pivot radius (R1) and the second pivot axis (42) lying on a second pivot radius (R2) - in each case based on the pivot axis (34) of the hand lever (32).

5. Anchoring device according to Claim 3 or 4, **characterized in that** the first connecting element (36) is connected to the first blocking element (20) via a third pivot axis (44) and the second connecting element (38) is connected to the second blocking element (22) via a fourth pivot axis (46), the third pivot axis (44) lying on a third pivot radius (R3) and the fourth pivot axis (46) lying on a fourth pivot radius (R4) -based on the pivot axis (24, 26) of the respective blocking element (20, 22).

6. Anchoring device according to Claims 4 and 5, **characterized in that** the ratio of sizes of the first pivot radius to the second pivot radius (R1:R2) is identical to the ratio of the third pivot axis to the fourth pivot axis (R3:R4).

7. Anchoring device according to one of Claims 4 to 6, **characterized in that** the hand lever (32) is designed to be larger in respect of its entire lever length and the resultant lever radius (R) than the two pivot radii (R1, R2) of the first and second pivot axes (40, 42).

8. Anchoring device according to one of Claims 1 to 7, **characterized in that** the/each blocking element (20, 22) has, starting from its retaining section (28), a catch edge (48) which runs obliquely in such a manner that, as the blocking element (20, 22) pivots, the attachment element (14) is pulled in a sliding manner over the catch edge (48) into the latching position.

9. Anchoring device according to one of Claims 1 to 8, **characterized in that** the/each blocking element (20, 22) has an approximately U-shaped receiving opening (50) which is matched to the attachment element (14) in such a manner that, in the latching position, the attachment element (14) is seated at least virtually in a play-free manner in the locking socket (18).

10. Anchoring device according to one of Claims 1 to 9, **characterized by** two additional anchorages (6, 8) which are offset forwards or backwards in the displacement direction relative to the locking units (2, 4) and are arranged on both sides of the central displacement axis (12), these anchorages (6, 8) each comprising an attachment element (14) and a receiving part (16) in the direction of the locking unit (2/4) - either with or without a blocking element.

11. Anchoring device according to one of Claims 1 to 10, **characterized in that** the attachment elements (14) form the functional parts assigned to the vehicle and the receiving parts (16) together with the locking sockets (18) and, if appropriate, the blocking elements (20, 22) and the actuating device (30) form the functional parts assigned to the seat.

12. Anchoring device according to one of Claims 3 to 11, **characterized in that** the hand lever (32) is arranged in the side region of the seat between the latter and a vehicle door in such a manner that it can be pivoted into its unlocking position for the purpose of removing the seat only when the vehicle door is open.

## Revendications

1. Dispositif d'ancrage pour un siège pouvant être monté et démonté sans outil à l'intérieur d'un véhicule, comprenant au moins une unité de verrouillage (2, 4) avec une première partie fonctionnelle associée au véhicule notamment de manière fixe et une deuxième partie fonctionnelle associée au siège, les parties fonctionnelles étant formées d'une part par un élément rapporté (14) en contre-dépouille, et d'autre part par une partie de logement (16) avec un logement de verrouillage (18), de telle sorte que le siège puisse être inséré pour le montage dans une direction approximativement perpendiculaire à un plan de base du siège (10) et puisse ensuite être déplacé parallèlement au plan de base du siège (10) dans une position verrouillée, l'élément rapporté (14) reposant, dans la position verrouillée, de manière fixée contre les mouvements relatifs verticaux dans le logement de verrouillage (18), et un élément d'arrêt (20, 22) étant associé à la partie de logement (16) en vue du blocage desserrable des parties fonctionnelles dans la position verrouillée, cet élément d'arrêt pouvant pivoter autour d'un axe (24, 26) notamment perpendiculaire au plan de base du siège (10) et présentant une portion de blocage (28) avec laquelle il vient en prise dans une position de blocage autour de l'élément rapporté (14) et le bloque contre un déplacement vers l'arrière hors de la position verrouillée,
**caractérisé en ce que** l'élément d'arrêt (20, 22) est connecté à un dispositif d'actionnement (30) et est réalisé dans la région de la portion de blocage (28) de telle sorte que le siège, après l'insertion verticale, puisse être déplacé dans la position verrouillée de manière forcée au moyen du dispositif d'actionnement (30), par le fait que l'élément d'arrêt (20, 22) saisit l'élément rapporté (14) et tire les parties fonctionnelles dans la position verrouillée lors du pivotement.

2. Dispositif d'ancrage selon la revendication 1,
**caractérisé en ce que** deux unités de verrouillage (2, 4) essentiellement de même type sont disposées de part et d'autre d'un axe médian de déplacement (12) du siège et sont connectées au même dispositif d'actionnement (30) de telle sorte qu'elles provoquent des deux côtés du siège un mouvement de déplacement uniforme.

3. Dispositif d'ancrage selon la revendication 2,
**caractérisé en ce que** le dispositif d'actionnement (30) est réalisé en tant qu'agencement de levier avec un levier à main (32) pouvant pivoter autour d'un axe de pivotement (34) notamment perpendiculaire au plan de base (10), le levier à main (32) étant d'une part connecté par le biais d'un premier élément de connexion (36) de manière articulée au premier élément d'arrêt (20) de la première unité de verrouillage (2), et d'autre part par le biais d'un deuxième élément de connexion (28) de manière articulée au deuxième élément d'arrêt (22) de la deuxième unité de verrouillage (4).

4. Dispositif d'ancrage selon la revendication 3,
**caractérisé en ce que** le levier à main (32) est connecté au premier élément de connexion (36) par le biais d'un premier axe de pivotement (40) et au deuxième élément de connexion (38) par le biais d'un deuxième axe de pivotement (42), le premier axe de pivotement (40), à chaque fois par rapport à l'axe de pivotement (34) du levier à main (32), se trouvant sur un premier rayon de pivotement (R1), et le deuxième axe de pivotement (42) se trouvant sur un deuxième rayon de pivotement (R2).

5. Dispositif d'ancrage selon la revendication 3 ou 4,
**caractérisé en ce que** le premier élément de connexion (36) est connecté au premier élément d'arrêt (20) par un troisième axe de pivotement (44) et le deuxième élément de connexion (38) est connecté au deuxième élément d'arrêt (22) par le biais d'un quatrième axe de pivotement (46), le troisième axe de pivotement (44), à chaque fois par rapport à l'axe de pivotement (24, 26) de l'élément d'arrêt respectif (20, 22), se trouvant sur un troisième rayon de pivotement (R3) et le quatrième axe de pivotement (46) se trouvant sur un quatrième rayon de pivotement (R4).

6. Dispositif d'ancrage selon les revendications 4 et 5,
**caractérisé en ce que** le rapport de grandeur du premier rayon de pivotement au deuxième rayon de pivotement (R1:R2) est égal au rapport du troisième au quatrième rayon de pivotement (R3:R4).

7. Dispositif d'ancrage selon l'une quelconque des revendications 4 à 6,
**caractérisé en ce que** le levier à main (32), en ce qui concerne sa longueur de levier totale et le rayon de levier (R) en résultant, est plus grand que les deux rayons de pivotement (R1, R2) des premier et deuxième axes de pivotement (40, 42).

8. Dispositif d'ancrage selon l'une quelconque des revendications 1 à 7,
**caractérisé en ce que** le ou chaque élément d'arrêt (20, 22) présente, à partir de sa portion de blocage (28), une arête de prise s'étendant obliquement (48), de telle sorte que l'élément rapporté (14) soit tiré lors du pivotement de l'élément d'arrêt (20, 22) en glissant dans la position verrouillée par-dessus l'arête de prise (48).

9. Dispositif d'ancrage selon l'une quelconque des revendications 1 à 8,
**caractérisé en ce que** le ou chaque élément d'arrêt (20, 22) présente une ouverture de logement (50) approximativement en forme de U, adaptée à l'élément rapporté (14), de telle sorte que l'élément rapporté (14) repose dans la position verrouillée au moins approximativement sans jeu dans le logement de verrouillage (18).

10. Dispositif d'ancrage selon l'une quelconque des revendications 1 à 9,
**caractérisé par** deux ancrages supplémentaires (6, 8), qui sont disposés, par rapport aux unités de verrouillage (2, 4), dans la direction de déplacement, de manière décalée vers l'avant ou vers l'arrière et de part et d'autre de l'axe médian de déplacement (12), ces ancrages (6, 8) se composant à chaque fois d'un élément rapporté (14) et d'une partie de logement (16) au sens de l'unité (14) et d'une partie de logement (16) au sens de l'unité de verrouillage (2, 4), au choix avec un ou sans élément d'arrêt.

11. Dispositif d'ancrage selon l'une quelconque des revendications 1 à 10,
**caractérisé en ce que** les éléments rapportés (14) forment les parties fonctionnelles associées au véhicule et les parties de logement (16) avec les logements de verrouillage (18) et éventuellement les éléments d'arrêt (20, 22), et le dispositif d'actionnement (30) forme les parties fonctionnelles associées au siège.

12. Dispositif d'ancrage selon l'une quelconque des revendications 3 à 11,
**caractérisé en ce que** le levier à main (32) est disposé dans la région latérale du siège entre celui-ci et une porte du véhicule de telle sorte qu'un pivotement dans sa position de déverrouillage aux fins d'un démontage du siège ne soit possible que lorsque la porte du véhicule est ouverte.
